# EUROPÄISCHE PATENTSCHRIFT

(11) **EP 3 630 000 B1**
(45) Veröffentlichungstag und Bekanntmachung des Hinweises auf die Patenterteilung: **07.07.2021**
(21) Anmeldenummer: 18729045.7
(22) Anmeldetag: 15.05.2018
(51) Int. Cl.: A61C 15/00

(54) **INTERDENTAL-REINIGUNGSVORRICHTUNG UND VERFAHREN ZUR HERSTELLUNG EINER INTERDENTAL-REINIGUNGSVORRICHTUNG**
INTERDENTAL CLEANING DEVICE AND METHOD FOR PRODUCING AN INTERDENTAL CLEANING DEVICE
DISPOSITIF DE NETTOYAGE INTERDENTAIRE ET PROCÉDÉ POUR LA FABRICATION D'UN DISPOSITIF DE NETTOYAGE INTERDENTAIRE

(30) Priorität: 02.06.2017 DE 102017209389
(43) Veröffentlichungstag der Anmeldung: 08.04.2020
(73) Patentinhaber: Luoro GmbH, 50858 Köln (DE)
(72) Erfinder: BAHLMANN, Louis, 50858 Köln (DE)
(74) Vertreter: Kutzenberger Wolff & Partner
(86) Internationale Anmeldenummer: PCT/EP2018/062516
(87) Internationale Veröffentlichungsnummer: WO 2018/219636

(56) Entgegenhaltungen:
- WO-A1-2015/039672
- WO-A1-2016/174263
- DE-A1- 4 236 167

## Beschreibung

### Stand der Technik

Die vorliegende Erfindung betrifft eine Interdental-Reinigungsvorrichtung mit einem, insbesondere spritzgegossenen, einstückigen Grundkörper, der einen ersten Schenkel und einen zweiten Schenkel aufweist, deren freie Enden gegeneinander verschwenkbar sind, wobei der erste Schenkel an seinem freien Ende eine zu einer Reinigungsseite vorspringende Positionierhilfe, insbesondere einen Konus, aufweist, die eine Öffnung in dem ersten Schenkel umgibt, und der zweite Schenkel an seinem freien Ende eine Halterung für eine durch die Öffnung hindurchführbare Interdentalbürste aufweist. Ferner betrifft die Erfindung ein Verfahren zur Herstellung einer Interdental-Reinigungsvorrichtung, wobei ein Grundkörper spritzgegossen wird, welcher einen einstückigen Grundkörper mit einem ersten Schenkel und einen zweiten Schenkel aufweist, deren freie Enden gegeneinander verschwenkbar sind, wobei der erste Schenkel an seinem freien Ende eine zu einer Reinigungsseite vorspringende Positionierhilfe, insbesondere einen Konus, aufweist, die eine Öffnung in dem ersten Schenkel umgibt, und der zweite Schenkel an seinem freien Ende eine Halterung für eine durch die Öffnung hindurchführbare Interdentalbürste aufweist.

Eine derartige Interdental-Reinigungsvorrichtung ist beispielsweise aus der WO 2016/174 263 A1 bekannt. Die an einem Schenkel angeordnete Positionierhilfe dieser Interdental-Reinigungsvorrichtung ist mit einem Überzug aus einem weichelastischen Kunststoff überzogenen und ermöglicht dadurch, die Interdentalbürste in zahnfleischschonender Weise auf einen Zahnzwischenraum auszurichten. Die bekannte Interdental-Reinigungsvorrichtung weist ferner ein Bogenelement auf, welches die beiden Schenkel im Bereich ihrer freien Enden überspannt und sich beim Verschwenken der freien Enden biegeelastisch verformt. Das Bogenelement bildet eine Barriere, die verhindert, dass die Lippe oder Wange eines Benutzers zwischen den Schenkeln der Interdental-Reinigungsvorrichtung eingeklemmt wird. Zudem unterstützt das Bogenelement die Rückstellbewegung der beiden Schenkel in ihre auseinandergeschwenkte Ruhestellung.

Bei der bekannten Interdental-Reinigungsvorrichtung hat es sich allerdings als nachteilig herausgestellt, dass das im Bereich der freien Enden der Schenkel angeordnete Bogenelement aufgrund der andauernden Biegebeanspruchung sehr anfällig für Materialermüdung und Materialbruch ist. Zudem ergibt sich aufgrund des Bogenelements eine ausladende Bauweise der Interdental-Reinigungsvorrichtung, welche die Handhabung bei der Zahnpflege erschwert. Weitere beispielhafte Interdental-Reinigungsvorrichtungen werden in DE 4236167 A1 und WO 2015/039672 A1 offenbart.

### Offenbarung der Erfindung

Die Aufgabe der vorliegenden Erfindung ist es, eine möglichst kompakte Interdental-Reinigungsvorrichtung der eingangs genannten Art anzugeben, die weniger anfällig für Materialermüdung ist.

Zur Lösung der Aufgabe wird eine Interdental-Reinigungsvorrichtung mit einem, insbesondere spritzgegossenen, einstückigen Grundkörper, vorgeschlagen, der einen ersten Schenkel und einen zweiten Schenkel aufweist, deren freie Enden gegeneinander verschwenkbar sind, wobei der erste Schenkel an seinem freien Ende eine zu einer Reinigungsseite vorspringende Positionierhilfe, insbesondere einen Konus, aufweist, die eine Öffnung in dem ersten Schenkel umgibt, und der zweite Schenkel an seinem freien Ende eine Halterung für eine durch die Öffnung hindurchführbare Interdentalbürste aufweist, wobei in einem Anfangsbereich der Schenkel, welcher den freien Enden der Schenkel gegenüberliegt, ein elastisches Rückstellelement zwischen dem ersten und dem zweiten Schenkel angeordnet ist.

Bei der erfindungsgemäßen Interdental-Reinigungsvorrichtung ist in dem Anfangsbereich der Schenkel ein elastisches Rückstellelement angeordnet, über welches die Schenkel in eine auseinandergeschwenkte Ruhestellung rückstellbar sind. Die Schenkel des Grundkörpers können durch einen Benutzer der Interdental-Reinigungsvorrichtung aus der Ruhestellung in eine aufeinander zu verschwenkte Reinigungsstellung verbracht werden, wobei das Rückstellelement elastisch verformt, insbesondere elastisch gestaucht, wird. In der Reinigungsstellung können sich die Schenkel des Grundkörpers berühren. Aufgrund der Anordnung des elastischen Rückstelleelements im Anfangsbereich der Schenkel, in welchem sich die Schenkel beim Verschwenken zwischen der Ruhestellung und der Reinigungsstellung weniger gegeneinander bewegen als an ihren freien Enden, kommt es zu einer vergleichsweise geringen Verformung des Rückstellelements. Im Vergleich zu einem an den freien Enden angeordneten Bogenelement wird das im Anfangsbereich der Schenkel angeordnete Rückstellelement einer geringeren Stauchung bzw. Durchbiegung ausgesetzt und ist daher weniger anfällig für Materialermüdung. Zudem verformt sich das Rückstellelement infolge einer Druckbeanspruchung durch die Schenkel des Grundkörpers nicht bis in den Bereich der freien Enden der Schenkel oder sogar über diese Enden hinaus, so dass eine kompakte Interdental-Reinigungsvorrichtung erhalten wird.

Gemäß einer vorteilhaften Ausgestaltung der Erfindung liegt das elastische Rückstellelement derart an dem ersten Schenkel und dem zweiten Schenkel an, dass ein Zwischenraum zwischen dem ersten Schenkel und dem zweiten Schenkel im Anfangsbereich der Schenkel vollständig durch das Rückstellelement ausgefüllt ist. Da das Rückstellelement den Zwischenraum zwischen den Schenkeln im Anfangsbereich der Schenkel ausfüllt, kommt es infolge eines Zusammenschwenkens der Schenkel im Wesentlichen zu einer Druckbeanspruchung des elastischen Rückstellelements. Besonders bevorzugt ist das elastische Rückstellelement nach Art eines Keils ausgebildet, welcher an die Form des anfangsseitigen Zwischenraums zwischen den Schenkeln angepasst ist.

Vorteilhaft ist es, wenn der Grundkörper derart ausgebildet ist, dass sich ein Zwischenraum zwischen dem ersten Schenkel und dem zweiten Schenkel ausgehend von deren freien Enden in Richtung des Anfangsbereichs bis zu einer Engstelle verjüngt und ausgehend von der Engstelle in Richtung des Anfangsbereichs erweitert. Bevorzugt ist der Anfangsbereich der Schenkel bogenförmig, insbesondere kreisbogenförmig ausgebildet. Der Zwischenraum zwischen den Schenkeln kann im Anfangsbereich der Schenkel ausgehend von der Engstelle einen im Wesentlichen kreisförmigen Querschnitt aufweisen. Insofern kann der Anfangsbereich nach Art eines Auges in dem Grundkörper ausgebildet sein.

In diesem Zusammenhang ist es bevorzugt, wenn sich das elastische Rückstellelement ausgehend von dem Anfangsbereich der Schenkel bis auf die dem Anfangsbereich gegenüberliegende Seite der Engstelle erstreckt. Hierdurch kann ein Formschluss zwischen dem Rückstellelement und den Schenkeln erreicht werden, welcher das Rückstellelement in einer Richtung parallel zur Haupterstreckungsrichtung der Schenkel an dem Grundkörper festlegt.

Bevorzugt ist das elastische Rückstellelement aus einem weichelastischen Kunststoff, ausgebildet. Besonders bevorzugt ist der weichelastische Kunststoff ein thermoplastisches Elastomer (TPE) oder ein Silikon, so dass das elastische Rückstellelement durch Spritzgießen gefertigt werden kann.

Als vorteilhaft hat es sich ferner herausgestellt, wenn das elastische Rückstellelement aus einem Material ausgebildet ist, dass eine Shore-Härte A im Bereich von 30 bis 80 aufweist, bevorzugt eine Shore-Härte A im Bereich von 50 bis 70, besonders bevorzugt eine Shore-Härte A im Bereich von 62 bis 67. Über die Shore-Härte A des Materials des elastischen Rückstellelements kann die auf die Schenkel des Grundkörpers wirkende Rückstellkraft eingestellt werden.

Gemäß einer vorteilhaften Ausgestaltung ist das Rückstellelement lösbar zwischen dem ersten und dem zweiten Schenkel angeordnet. Die lösbare Anordnung des Rückstellelements zwischen den Schenkeln des Grundkörpers bringt den Vorteil mit sich, dass das Rückstellelement ausgetauscht werden kann, um die auf die Schenkel wirkende Rückstellkraft einzustellen. Beispielsweise ist es möglich, ein elastisches Rückstellelement mit einer größeren Shore-Härte A zwischen den Schenkeln anzuordnen, um eine höhere Rückstellkraft zu erhalten oder ein elastisches Rückstellelement mit einer geringeren Shore-Härte A um eine geringere Rückstellkraft zu erhalten.

Bevorzugt ist an dem elastischen Rückstellelement ein erstes Formschlusselement angeordnet, welches mit einem zweiten Formschlusselement an dem ersten oder zweiten Schenkel zusammenwirkt, um das elastische Rückstellelement zwischen den Schenkeln festzulegen. Das an dem Rückstellelement angeordnete erste Formschlusselement ist bevorzugt als Ausnehmung ausgebildet, in welche ein als Vorsprung an dem ersten oder dem zweiten Schenkel ausgebildetes zweites Formschlusselement eingreift. Auf diese Weise kann ein Formschluss zwischen dem Rückstellelement und einem der Schenkel hergestellt werden, der ein Herausrutschen des Rückstellelements aus dem Zwischenraum der Schenkel in einer Richtung verhindert, welche senkrecht zu einer Schwenkrichtung der Schenkel angeordnet ist, in welcher die Schenkel verschwenkbar sind. Alternativ kann das erste Formschlusselement an dem Rückstellelement als Vorsprung ausgebildet sein, welcher in ein als Ausnehmung ausgebildetes zweites Formschlusselement an dem ersten oder zweiten Schenkel eingreift. Das zweite Formschlusselement an dem ersten oder dem zweiten Schenkel des Grundkörpers ist besonders bevorzugt zusätzlich zu der vorstehend erwähnten Engstelle in dem Zwischenraum zwischen dem ersten und dem zweiten Schenkel vorgesehen. Gemäß einer weiteren Alternative kann das Formschlusselement an dem elastischen Rückstellelement als Außenkante des Rückstellelements ausgebildet sein und das Formschlusselement an dem Grundkörper kann als Stufe ausgebildet sein, die mit der Außenkante zusammenwirkt.

Eine weitere bevorzugte Ausgestaltung sieht vor, dass das Rückstellelement einstückig mit einem, insbesondere spritzgegossenen, Überzug des Grundkörpers ausgebildet ist. Hierdurch wird es möglich, die Interdental-Reinigungsvorrichtung kostengünstig in einem Mehrkomponenten-Spritzgussverfahrens zu fertigen. Das bedeutet, dass der Grundkörper, ein Überzug des Grundkörpers und das elastische Rückstellelement in einer gemeinsamen Spritzgussvorrichtung gegossen werden können, wobei für den Grundkörper einerseits und den Überzug sowie das elastische Rückstellelement andererseits unterschiedliche Materialien verwendet werden. Das mit dem spritzgegossenen Überzug einstückig ausgebildete Rückstellelement kann fest mit dem Grundkörper verbunden sein, so dass ein ungewolltes Lösen des elastischen Rückstellelements von dem Grundkörper verhindert wird.

Vorteilhaft ist es ferner, wenn der Grundkörper im Anfangsbereich der Schenkel eine in den Zwischenraum zwischen dem ersten und dem zweiten Schenkel mündende Einlauföffnung aufweist. Durch die Einlauföffnung kann im Rahmen eines Mehrkomponenten-Spritzgussverfahrens das verflüssigte Material des elastischen Rückstellelements in den Zwischenraum zwischen den Schenkeln des Grundkörpers eingebracht werden. Die Einlauföffnung kann beispielsweise als Nut in dem Grundkörper ausgebildet sein.

Um ein möglichst gute Handhabbarkeit der Interdental-Reinigungsvorrichtung zu ermöglichen, weist der Grundkörper einen sich an den Anfangsbereich der Schenkel anschließenden, insbesondere stabförmigen, Griffbereich auf. In dem Griffbereich kann die Interdental-Reinigungsvorrichtung während des Reinigungsvorgangs in einer Hand des Benutzers gehalten werden.

Bevorzugt ist an der Halterung eine Interdentalbürste angeordnet. Die Interdentalbürste weist vorteilhafterweise einen Befestigungsabschnitt auf, der sich im Wesentlichen rechtwinklig zu einem Reinigungsabschnitt der Interdentalbürste erstreckt. Über den Befestigungsabschnitt kann die Interdentalbürste an der Halterung des zweiten Schenkels befestigt werden. Der Reinigungsabschnitt weist bevorzugt ein Bürstenelement auf, welcher in einem insbesondere zylindrischen Halteabschnitt gehalten ist. Der zylindrische halteabschnitt kann derart ausgebildet sein, dass er in die Öffnung in den anderen Schenkel einführbar ist.

Gemäß einer vorteilhaften Ausgestaltung der Erfindung ist in dem Anfangsbereich der Schenkel ein einstückig mit dem Grundkörper vorgesehenes Verstärkungselement derart angeordnet, dass zwischen dem Verstärkungselement und dem ersten Schenkel ein erster Zwischenraum-Bereich angeordnet ist und zwischen dem Verstärkungselement und dem zweiten Schenkel ein zweiter Zwischenraum-Bereich angeordnet ist. Insofern ist das Verstärkungselement als Teil des Grundkörpers aus demselben Material wie der Rest des Grundkörpers ausgebildet. Das elastische Rückstellelement kann das Verstärkungselement auf mehrere Seiten umschließen. Durch ein derartiges Verstärkungselement kann das elastische Rückstellelement in seinem Inneren verstärkt werden. Hierdurch können die Auswirkungen eines unerwünschten Zusammenziehens des elastischen Rückstellelements bei längerer Lebensdauer der Interdental-Reinigungsvorrichtung abgemildert werden. Bevorzugt liegt das elastische Rückstellelement derart an dem ersten Schenkel und dem zweiten Schenkel an, dass der erste Zwischenraum-Bereich zwischen dem Verstärkungselement und dem ersten Schenkel vollständig durch das elastische Rückstellelement ausgefüllt ist und dass der zweite Zwischenraum-Bereich zwischen dem Verstärkungselement und dem zweiten Schenkel vollständig durch das elastische Rückstellelement ausgefüllt ist. Falls sich das Verstärkungselement nur über einen Teil der Breite der Schenkel erstreckt, kann ein Abschnitt des Zwischenraums im Anfangsbereich der Schenkel zwischen dem ersten und zweiten Schenkel, in dem kein Teil des Rückstellelements zwischen dem ersten und zweiten Schenkel angeordnet ist, vollständig durch das Rückstellelement ausgefüllt sein.

Ein weiterer Gegenstand der Erfindung ist ein Verfahren zur Herstellung einer Interdental-Reinigungsvorrichtung, wobei ein Grundkörper spritzgegossen wird, welcher einen ersten Schenkel und einen zweiten Schenkel aufweist, deren freie Enden gegeneinander verschwenkbar sind, wobei der erste Schenkel an seinem freien Ende eine zu einer Reinigungsseite vorspringende Positionierhilfe, insbesondere einen Konus, aufweist, die eine Öffnung in dem ersten Schenkel umgibt, und der zweite Schenkel an seinem freien Ende eine Halterung für eine durch die Öffnung hindurchführbare Interdentalbürste aufweist, wobei in einem Anfangsbereich der Schenkel, welcher den freien Enden der Schenkel gegenüberliegt, ein elastisches Rückstellelement zwischen dem ersten und dem zweiten Schenkel angeordnet wird.

Bei dem Herstellungsverfahren ergeben sich dieselben Vorteile wie sie bereits im Zusammenhang mit der erfindungsgemäßen Interdental-Reinigungsvorrichtung erläutert worden sind.

Gemäß einer vorteilhaften Ausgestaltung des Verfahrens wird das elastische Rückstellelement lösbar in dem Anfangsbereich der Schenkel angeordnet. Hierdurch wird es möglich, dass der Benutzer der Interdental-Reinigungsvorrichtung das Anordnen des elastischen Rückstellelements selbst vornehmen kann bzw. ein zwischen den Schenkeln des Grundkörpers vorinstalliertes Rückstellelement selbst herausnehmen und/oder gegen ein anderes elastische Rückstellelement austauschen kann.

Eine alternative vorteilhafte Ausgestaltung des Verfahrens sieht vor, dass das elastische Rückstellelement an den Grundkörper angegossen wird, insbesondere durch ein Mehrkomponenten-Spritzgussverfahren. Eine derartige Ausgestaltung ermöglicht eine besonders kostengünstige Herstellung der Interdental-Reinigungsvorrichtung. Zudem kann durch das angießen des Rückstellelements an den Grundkörper wirksam verhindert werden, dass sich das Rückstellelement ungewollt von dem Grundkörper löst. Das elastische Rückstellelement kann in einem gemeinsamen Verfahrensschritt mit einem Überzug des Grundkörpers in anderen Bereichen des Grundkörpers hergestellt werden.

In diesem Zusammenhang hat es sich als besonders vorteilhaft herausgestellt, wenn das Material des elastischen Rückstellelements durch eine Einlauföffnung, insbesondere eine Nut, im Anfangsbereich der Schenkel des Grundkörpers in den Zwischenraum zwischen den Schenkeln eingebracht, insbesondere eingespritzt, wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Figur 1** zeigt ein erstes Ausführungsbeispiel einer Interdental-Reinigungsvorrichtung gemäß der Erfindung in einer Seitenansicht.
Die **Figur 2** zeigt den Grundkörper mit Überzug der Interdental-Reinigungsvorrichtung nach Figur 1 in einer Seitenansicht.
Die **Figur 3** zeigt das elastische Rückstellelement der Interdental-Reinigungsvorrichtung nach Figur 1 in einer schematischen Seitenansicht.
Die **Figur 4** zeigt das elastische Rückstellelement der Interdental-Reinigungsvorrichtung nach Figur 1 in einer Draufsicht.
Die **Figur 5** zeigt ein zweites Ausführungsbeispiel einer Interdental-Reinigungsvorrichtung gemäß der Erfindung in einer Seitenansicht.
Die **Figur 6** zeigt die Interdental-Reinigungsvorrichtung nach Figur 5 in einer perspektivischen Darstellung.
Die **Figur 7** zeigt die Interdental-Reinigungsvorrichtung nach Figur 5 in einer Seitenansicht, wobei die Interdentalbürste entfernt ist.
Die **Figur 8** zeigt den Grundkörper der Interdental-Reinigungsvorrichtung nach Figur 5 in einer Seitenansicht.
Die **Figur 9** zeigt den Grundkörper nach Figur 8 in einer perspektivischen Darstellung.
Die **Figur 10** zeigt ein drittes Ausführungsbeispiel einer Interdental-Reinigungsvorrichtung gemäß der Erfindung in einer Seitenansicht, wobei das elastische Rückstellelement nicht dargestellt ist.
Die **Figur 11** zeigt die Interdental-Reinigungsvorrichtung nach Figur 10 in einer perspektivischen Darstellung.
Die **Figur 12** zeigt die Interdental-Reinigungsvorrichtung nach Figur 10 in einer weiteren perspektivischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

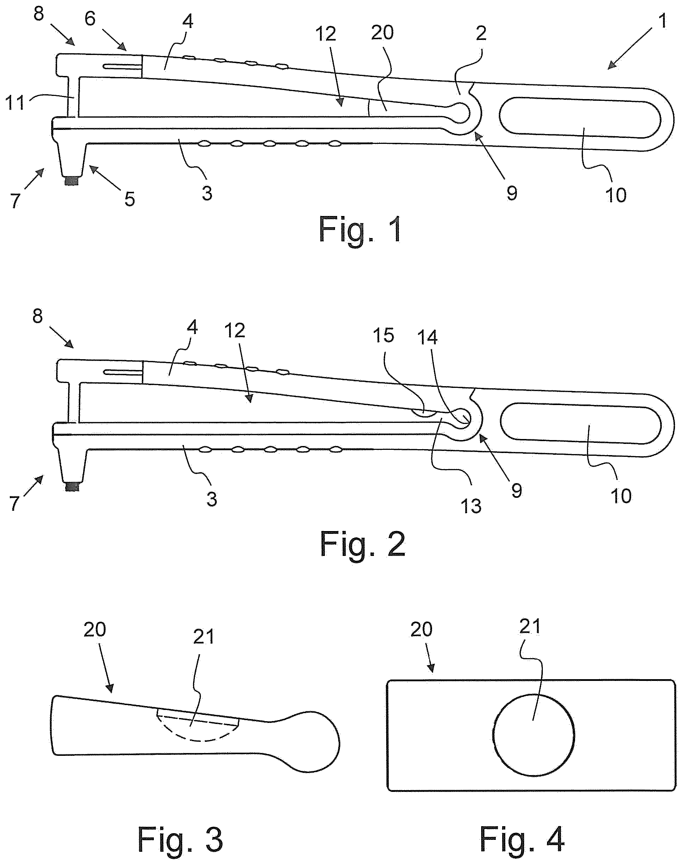

In der **Figur 1** ist eine Interdental-Reinigungsvorrichtung 1 gemäß einem ersten Ausführungsbeispiel der Erfindung dargestellt. Die Interdental-Reinigungsvorrichtung 1 umfasst einen einstückigen Grundkörper 2, der einen ersten Schenkel 3 und einen zweiten Schenkel 4 aufweist. Die beiden Schenkel 3, 4 sind in einem Anfangsbereich 9 der Schenkel 3, 4 einstückig miteinander verbunden. An den Anfangsbereich 9 der Schenkel 3, 4 schließt sich ein stabförmiger Griffbereich 10 des Grundkörpers 2 an. Der Grundkörper 2 ist aus einer Hartkomponente, beispielsweise aus Polypropylen (PP), spritzgegossen. Das Material des Grundkörpers 2 ist derart gewählt, dass der Grundkörper 2 eine gewisse Elastizität aufweist, die ein Verschwenken der beiden Schenkel aus der in Figur 1 gezeigten Ruhestellung in eine Reinigungsstellung ermöglicht, in welcher die Schenkel aufeinander zu geschwenkt sind, insbesondere aneinander anliegen. Zwischen der Ruhestellung und der Reinigungsstellung kann beispielsweise eine Winkeldifferenz von kleiner als 20°, bevorzugt kleiner als 15 ° besonders bevorzugt kleiner als 10°, überwunden werden.

Auf einem dem Anfangsbereich 9 der Schenkel 3, 4 gegenüberliegenden freien Ende 7 des ersten Schenkels 3 ist eine Positionierhilfe 5 angeordnet, welche zu einer Reinigungsseite hin vorspringend ausgebildet ist und eine Öffnung in dem ersten Schenkel 3 umgibt. Die Positionierhilfe 5 kann an die Außenseite zweier benachbarter Zähne angelegt werden und erleichtert durch ihre Form die Positionierung der Öffnung im Bereich vor dem Zahnzwischenraum der beiden benachbarten Zähne. Bei dem Ausführungsbeispiel ist die Positionierhilfe 5 als Konus ausgebildet. Davon abweichend sind aber auch andere Formen der Positionierhilfe 5 denkbar, bei denen sich der Querschnitt der Positionierhilfe 5 ausgehend von dem Schenkel 3 zu der Reinigungsseite hin verjüngt. Die Öffnung in dem ersten Schenkel 3 ist als Durchgangsöffnung ausgestaltet, welche sich von der Reinigungsseite des ersten Schenkels 3, auf welcher sich die Positionierhilfe 5 befindet, zu einer gegenüberliegenden Seite erstreckt.

Der zweite Schenkel 4 weist an seinem freien Ende 8, welches dem Anfangsbereich 9 der Schenkel 3, 4 gegenüberliegt, eine Halterung 5 für eine Interdentalbürste 11 auf. Die Interdentalbürste 11 kann durch die Öffnung in dem ersten Schenkel 3 hindurchgeführt werden. Dabei ist die Halterung 5 derart an dem zweiten Schenkel 4 angeordnet, dass eine an der Halterung 5 befestigte Interdentalbürste 11 beim Verschwenken des zweiten Schenkels 4 auf den ersten Schenkel 3 zu durch die Öffnung in dem ersten Schenkel 3 hindurchgeführt wird. Die Interdentalbürste 11 kann beim Verschwenken der Schenkel 3, 4 gegeneinander auf der Reinigungsseite des ersten Schenkels 3 aus der Öffnung austreten und in den zu reinigenden Zahnzwischenraum eindringen.

Um die Schenkel 3, 4 in ihre auseinandergeschwenkte Ruhestellung rückstellen zu können, ist bei der Interdental-Reinigungsvorrichtung 1 gemäß der ersten Ausführungsbeispiel ein elastisches Rückstellelement 20 vorgesehen, welches in dem Anfangsbereich 9 der Schenkel 3, 4 lösbar zwischen dem ersten Schenkel 3 und dem zweiten Schenkel 4 angeordnet ist. Das elastische Rückstellelement 20 füllt den Zwischenraum 12 zwischen dem ersten Schenkel 3 und dem zweiten Schenkel 4 im Anfangsbereich 9 der Schenkel 3, 4 vollständig aus. Das elastische Rückstellelement 20 ist aus einem im Vergleich zu dem Grundkörper 2 weicheren Material ausgebildet. Bevorzugt handelt es sich bei dem Material des Rückstellelements 20 um einen weichelastischen Kunststoff, beispielsweise ein thermoplastisches Elastomer oder ein Silikon mit einer Shore-Härte A im Bereich von 30 bis 80, bevorzugt mit einer Shore-Härte A im Bereich von 50 bis 70, besonders bevorzugt mit einer Shore-Härte A im Bereich von 62 bis 67.

In der **Figur 2** ist der Grundkörper 2 der Interdental-Reinigungsvorrichtung 1 ohne das elastische Rückstellelement 20 gezeigt. Es ist erkennbar, dass sich zwischen dem ersten Schenkel 3 und dem zweiten Schenkel 4 ein Zwischenraum 12 ausbildet, der sich ausgehend von den freien Enden 7, 8 der beiden Schenkel 3, 4 in Richtung des Anfangsbereichs 9 der Schenkel 3,4 bis zu einer Engstelle 13 verjüngt. Ausgehend von der Engstelle 13 erweitert sich der Zwischenraum in Richtung des Anfangsbereichs 9, wo er an einer kreisbogenförmigen Innenwand 14 des Grundkörpers 2 endet. Zwischen der Engstelle 13 und der Innenwand 14 weist der Zwischenraum 12 einen kreisförmigen Querschnitt auf. Insofern bildet der Zwischenraum 12 zwischen der Engstelle 13 und der Innenwand 14 ein Auge.

Ferner ist an dem zweiten Schenkel 4 ein Formschlusselement 15 angeordnet. Das Formschlusselement 15 ist als Vorsprung ausgebildet, der an der dem Zwischenraum 12 zugewandten Innenseite des zweiten Schenkels 4 angeordnet ist. Der Vorsprung ist einstückig mit dem zweiten Schenkel 4 vorgesehen.

In den **Figuren 3 und 4** ist das von dem Grundkörper 2 gelöste elastische Rückstellelement 20 dargestellt. An dem elastischen Rückstellelement 20 ist ein weiteres Formschlusselement 21 angeordnet, welches mit dem Formschlusselement 15 des zweiten Schenkels 4 kooperiert, wenn das elastische Rückstellelement 20 in den Zwischenraum 12 zwischen den Schenkel 3, 4 eingebracht ist. Das Formschlusselement 21 des Rückstellelements 20 ist als Ausnehmung in dem Rückstellelement 20 ausgebildet. Wenn das Rückstellelement 20 in den Zwischenraum 12 im Anfangsbereich 9 der Schenkel 3, 4 eingebracht ist, so füllt der Vorsprung des zweiten Schenkels 4 die Ausnehmung in dem Rückstelleelement 20 aus und legt das Rückstellelement 20 zwischen den Schenkeln 3, 4 fest. Ferner wird das Rückstellelement 20 durch einen weiteren Formschluss mit der Engstelle 13 des Zwischenraums 12 festgelegt. Denn das Rückstellelement 20 erstreckt sich ausgehend von dem Anfangsbereich 9 der Schenkel 3,4 bis auf die dem Anfangsbereich 9 gegenüberliegende Seite der Engstelle 13 und umschließt dabei die Engstelle formschlüssig.

Die Interdental-Reinigungsvorrichtung 1 nach dem ersten Ausführungsbeispiel kann mit einem Verfahren hergestellt werden, bei welchem zunächst der Grundkörper 2 spritzgegossen wird. In einem weiteren Schritt wird in dem Anfangsbereich 9 der Schenkel 3, 4 des Grundkörpers 2 das elastische Rückstellelement 20 zwischen dem ersten Schenkel 3 und dem zweiten Schenkel 4 angeordnet. Das Anordnen des Rückstellelements 20 zwischen den Schenkeln 3, 4 kann entweder während der Fertigung der Interdental-Reinigungsvorrichtung 1, d.h. vor dem Verpacken dieser, erfolgen. Alternativ kann das Rückstellelement 20 separat gefertigt werden und von einem Benutzer der Interdental-Reinigungsvorrichtung 2 zwischen die Schenkel 3, 4 eingebracht werden. Der Benutzer kann das lösbare Rückstellelement 20 wahlweise von dem Grundkörper 2 entfernen und gegen ein anderes Rückstellelement 20 austauschen. Somit ist es möglich, die auf die Schenkel 3, 4 wirkende Rückstellkraft benutzerspezifisch durch ein geeignetes Rückstellelement 20 einzustellen. Hierbei hat es sich als vorteilhaft erwiesen, wenn Rückstellelemente 20 farblich kodiert sind, beispielsweise derart, dass Rückstellelemente 20 mit einer bestimmten Shore-Härte A bzw. mit einer bestimmten Rückstellkraft in einer vorgegebenen Farbe ausgebildet sind. Ferner kann ein abgenutztes Rückstellelement 20 gegen ein neuwertiges Rückstellelement 20 ausgetauscht werden.

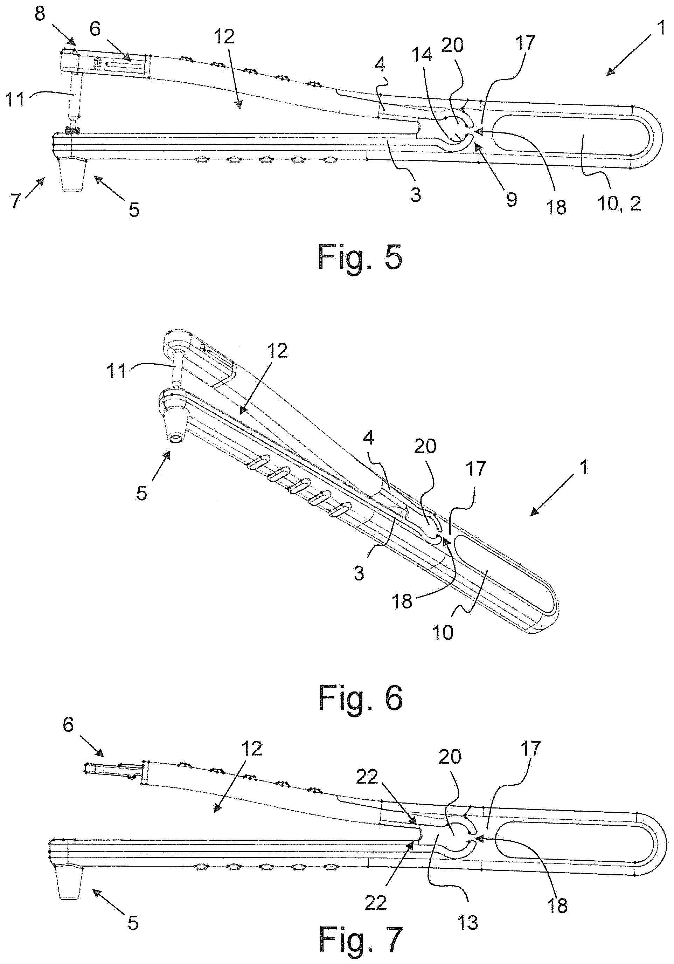

Die **Figuren 5, 6 und 7** zeigen eine Interdental-Reinigungsvorrichtung 1 gemäß einem zweiten Ausführungsbeispiel der Erfindung. Auch diese Interdental-Reinigungsvorrichtung 1 umfasst einen einstückigen Grundkörper 2 mit einem ersten Schenkel 3, einem zweiten Schenkel 4 und einem stabförmigen Griffbereich 10. Die beiden Schenkel 3, 4 sind in einem Anfangsbereich 9 der Schenkel 3, 4 einstückig miteinander und mit dem Griffbereich 10 verbunden. Zwischen den Schenkeln 3, 4 ist ein Zwischenraum 12 ausbildet, der sich ausgehend von den freien Enden 7, 8 der beiden Schenkel 3, 4 in Richtung des Anfangsbereichs 9 der Schenkel 3,4 bis zu einer Engstelle 13 verjüngt. Der Grundkörper 2 ist aus einer Hartkomponente, beispielsweise aus Polypropylen (PP), spritzgegossen. Der Grundkörper 2 weist eine gewisse Elastizität auf, die das Verschwenken der beiden Schenkel aus der in den Figuren 5 und 6 gezeigten Ruhestellung in eine Reinigungsstellung möglich ist, in welcher die Schenkel aufeinander zu geschwenkt sind, insbesondere aneinander anliegen. Zwischen der Ruhestellung und der Reinigungsstellung kann beispielsweise eine Winkeldifferenz von kleiner als 20°, bevorzugt kleiner als 15 ° besonders bevorzugt kleiner als 10°, überwunden werden.

Die Interdental-Reinigungsvorrichtung 1 gemäß dem zweiten Ausführungsbeispiel weist ebenfalls eine Positionierhilfe 5 in Form eines Konus auf, die an einem freien Ende 7 des ersten Schenkels 3 angeordnet ist. Die Positionierhilfe umgibt eine Öffnung in dem ersten Schenkel 3, durch welche eine Interdentalbürste 11 hindurchgeführt werden kann. Der zweite Schenkel 4 weist an seinem freien Ende 8 eine Halterung 5 für eine solche Interdentalbürste 11 auf. Die Interdentalbürste 11 kann durch die Öffnung in dem ersten Schenkel 3 hindurchgeführt werden. Dabei ist die Halterung 5 derart an dem zweiten Schenkel 4 angeordnet, dass die an der Halterung 5 befestigte Interdentalbürste 11 beim Verschwenken des zweiten Schenkels 4 auf den ersten Schenkel 3 zu durch die Öffnung in dem ersten Schenkel 3 hindurchgeführt wird. Die Interdentalbürste 11 kann beim Verschwenken der Schenkel 3, 4 gegeneinander auf der Reinigungsseite des ersten Schenkels 3 aus der Öffnung austreten und in den zu reinigenden Zahnzwischenraum eindringen.

Auch bei der Interdental-Reinigungsvorrichtung 1 des zweiten Ausführungsbeispiels ist in dem Anfangsbereich 9 der Schenkel 3, 4, welcher den freien Enden 7, 8 der Schenkel 3, 4 gegenüberliegt, ein elastisches Rückstellelement 20 zwischen dem ersten Schenkel 3 und dem zweiten Schenkel 4 angeordnet. Das Rückstellelement 20 liegt derart an dem ersten Schenkel 3 und dem zweiten Schenkel 4 an, dass der Zwischenraum 12 zwischen dem ersten Schenkel 3 und dem zweiten Schenkel 4 im Anfangsbereich 9 der Schenkel 3, 4 vollständig durch das Rückstellelement 20 ausgefüllt ist. Im Anfangsbereich 9 ist der Zwischenraum 12 nach Art eines Auges mit einer kreisbogenförmigen Innenwand 14 des Grundkörpers 2 ausgebildet. Zwischen der Engstelle 13 und der Innenwand 14 weist der Zwischenraum 12 einen kreisförmigen Querschnitt auf. Im Gegensatz zu dem ersten Ausführungsbeispiel ist das elastische Rückstellelement 20 gemäß dem zweiten Ausführungsbeispiel fest mit dem Grundkörper 2, insbesondere mit den Schenkeln 3, 4, verbunden. Hierzu ist das elastische Rückstellelement 20 einstückig mit einem spritzgegossenen Überzug 17 des Grundkörpers 2 ausgebildet. Der Überzug 17 des Grundkörpers 2 ist aus einem weichelastischen Material gebildet, beispielsweise einem thermoplastischen Elastomer oder ein Silikon mit einer Shore-Härte A im Bereich von 30 bis 80. Zudem erstreckt sich das elastische Rückstellelement 20 ausgehend von dem Anfangsbereich 9 der Schenkel 3, 4 bis auf die dem Anfangsbereich 9 gegenüberliegenden Seite der Engstelle 13.

Die Interdental-Reinigungsvorrichtung 1 des zweiten Ausführungsbeispiels kann mittels eines Verfahrens hergestellt werden, bei welchem der Grundkörper 2 spritzgegossen wird, welcher den ersten Schenkel 3 und den zweiten Schenkel 4 aufweist. In dem Anfangsbereich 9 der Schenkel 3, 4 wird das elastische Rückstellelement 20 zwischen dem ersten Schenkel 3 und dem zweiten Schenkel 4 an den Grundkörper 2 angegossen. Hierbei kommt ein Mehrkomponenten-Spritzgussverfahren zum Einsatz. Die Ausbildung des elastischen Rückstellelements 20 erfolgt dabei zusammen mit der Ausbildung des Überzugs 17 auf dem Grundkörper 2, so dass der Überzug 17 und das Rückstellelement 20 einstückig ausgebildet sind.

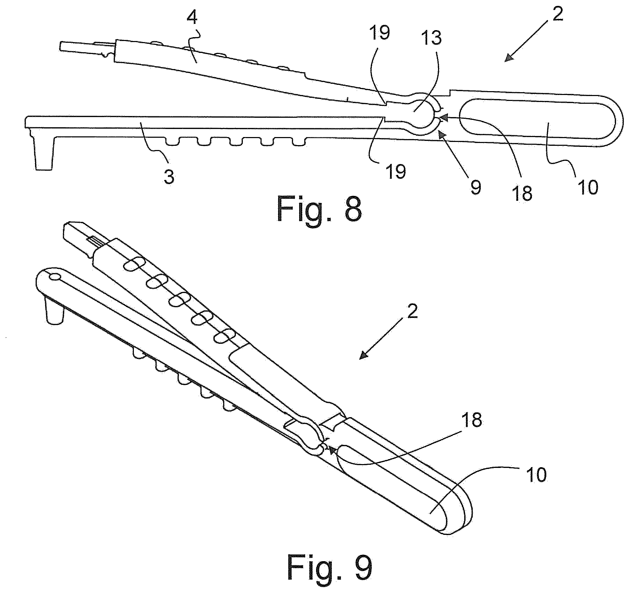

Um das Einbringen des verflüssigten Materials zur Ausbildung des Rückstellelements 20 in den Zwischenraum 12 zwischen den Schenkeln 3, 4 zu erleichtern, weist der Grundkörper 2 im Anfangsbereich 9 der Schenkel 3, 4 eine in den Zwischenraum 12 zwischen dem ersten Schenkel 3 und dem zweiten Schenkel 4 mündende Einlauföffnung 18 auf. Wie den Darstellungen in den **Figuren 8 und 9** entnommen werden kann, ist die Einlauföffnung 18 bei dem zweiten Ausführungsbeispiel als Nut ausgebildet. Somit kann bei der Herstellung der Interdental-Reinigungsvorrichtung 1 das Material des elastischen Rückstellelements 20 durch die Einlauföffnung 18 im Anfangsbereich 9 des Grundkörpers 2 in den Zwischenraum zwischen den Schenkeln 3,4 eingebracht werden. Ferner ist erkennbar, dass an dem ersten Schenkel 3 und dem zweiten Schenkel 4 des Grundkörpers 2 jeweils ein Formschlusselement 19 angeordnet ist. Die Formschlusselemente 19 sind nach Art einer Stufe ausgebildet. Die Formschlusselemente 19 an dem Grundkörper 2 wirken mit als Außenkante ausgebildeten Formschlusselementen 22 des Rückstellelementes 20 zusammen, um das elastische Rückstellelement zwischen den Schenkeln 3, 4 zusätzlich festzulegen, vgl. **Figur 7****.**

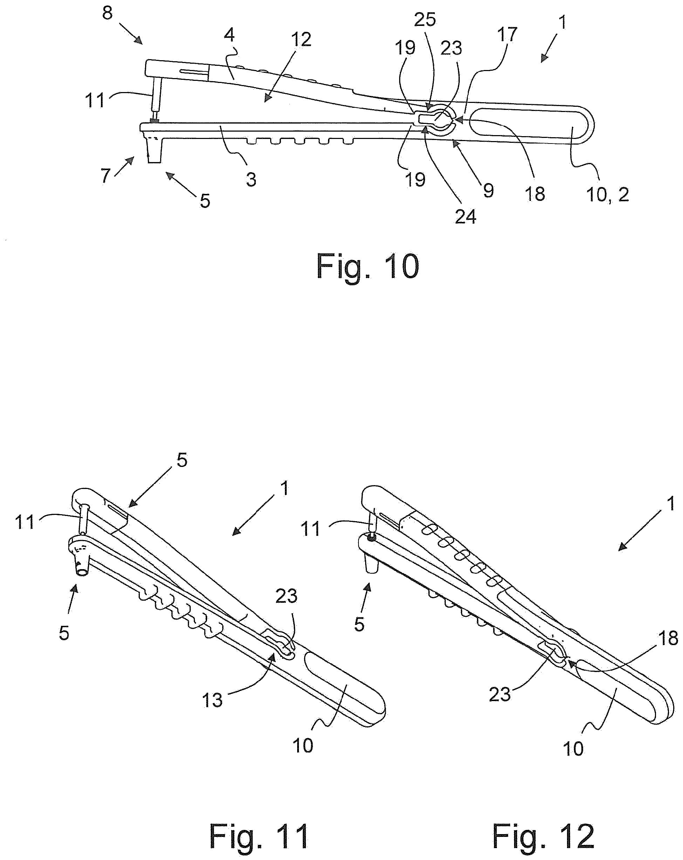

In den Figuren **10, 11 und 12** ist ein drittes Ausführungsbeispiel einer Interdental-Reinigungsvorrichtung gemäß der Erfindung dargestellt. Auch diese Interdental-Reinigungsvorrichtung 1 umfasst einen einstückigen Grundkörper 2 mit einem ersten Schenkel 3, einem zweiten Schenkel 4 und einem stabförmigen Griffbereich 10. Die beiden Schenkel 3, 4 sind in einem Anfangsbereich 9 der Schenkel 3, 4 einstückig miteinander und mit dem Griffbereich 10 verbunden. Zwischen den Schenkeln 3, 4 ist ein Zwischenraum 12 ausbildet, der sich ausgehend von den freien Enden 7, 8 der beiden Schenkel 3, 4 in Richtung des Anfangsbereichs 9 der Schenkel 3,4 bis zu einer Engstelle 13 verjüngt. Der Grundkörper 2 ist aus einer Hartkomponente, beispielsweise aus Polypropylen (PP), spritzgegossen. Der Grundkörper 2 weist eine gewisse Elastizität auf, die das Verschwenken der beiden Schenkel aus der in den Figuren 5 und 6 gezeigten Ruhestellung in eine Reinigungsstellung möglich ist, in welcher die Schenkel aufeinander zu geschwenkt sind, insbesondere aneinander anliegen. Zwischen der Ruhestellung und der Reinigungsstellung kann beispielsweise eine Winkeldifferenz von kleiner als 20°, bevorzugt kleiner als 15 ° besonders bevorzugt kleiner als 10°, überwunden werden.

Die Interdental-Reinigungsvorrichtung 1 gemäß dem dritten Ausführungsbeispiel weist ebenfalls eine Positionierhilfe 5 in Form eines Konus auf, die an einem freien Ende 7 des ersten Schenkels 3 angeordnet ist. Die Positionierhilfe umgibt eine Öffnung in dem ersten Schenkel 3, durch welche eine Interdentalbürste 11 hindurchgeführt werden kann. Der zweite Schenkel 4 weist an seinem freien Ende 8 eine Halterung 5 für eine solche Interdentalbürste 11 auf. Die Interdentalbürste 11 kann durch die Öffnung in dem ersten Schenkel 3 hindurchgeführt werden. Dabei ist die Halterung 5 derart an dem zweiten Schenkel 4 angeordnet, dass die an der Halterung 5 befestigte Interdentalbürste 11 beim Verschwenken des zweiten Schenkels 4 auf den ersten Schenkel 3 zu durch die Öffnung in dem ersten Schenkel 3 hindurchgeführt wird. Die Interdentalbürste 11 kann beim Verschwenken der Schenkel 3, 4 gegeneinander auf der Reinigungsseite des ersten Schenkels 3 aus der Öffnung austreten und in den zu reinigenden Zahnzwischenraum eindringen.

Auch bei der Interdental-Reinigungsvorrichtung 1 des dritten Ausführungsbeispiels ist in dem Anfangsbereich 9 der Schenkel 3, 4, welcher den freien Enden 7, 8 der Schenkel 3, 4 gegenüberliegt, ein elastisches Rückstellelement zwischen dem ersten Schenkel 3 und dem zweiten Schenkel 4 angeordnet. Dieses Rückstellelement ist zur besseren Sichtbarkeit der Besonderheiten des dritten Ausführungsbeispiels in den Figuren 10, 11 und 12 nicht gezeigt. Die äußere Erscheinung dieser Interdental-Reinigungsvorrichtung mit elastischem Rückstellelement entspricht der des zweiten Ausführungsbeispiels, so dass in diesem Zusammenhang auf die Darstellungen des zweiten Ausführungsbeispiels verwiesen wird. Im Gegensatz zu den vorhergehenden Ausführungsbeispielen ist in dem Anfangsbereich 9 der Schenkel 3, 4 ein einstückig mit dem Grundkörper 2 vorgesehenes Verstärkungselement 23 derart angeordnet, dass zwischen dem Verstärkungselement 23 und dem ersten Schenkel 3 ein erster Zwischenraum-Bereich 24 angeordnet ist und zwischen dem Verstärkungselement 23 und dem zweiten Schenkel 4 ein zweiter Zwischenraum-Bereich 25 angeordnet ist. Das Verstärkungselement 23 ist somit als Teil des Grundkörpers 2 aus demselben Material wie der Rest des Grundkörpers 2 ausgebildet. Bei dem Ausführungsbeispiel ist das Verstärkungselement 23 nach Art einer in den Anfangsbereich 9 des Zwischenraums 12 ragenden Zunge ausgebildet. Wie den Darstellungen in Figur 11 und 12 entnommen werden kann, weist das Verstärkungselement 23 eine Breite auf, die geringer ist als die Breite der Schenkel 3, 4. Insofern kann das in den Figuren 10, 11 und 12 nicht gezeigte elastische Rückstellelement das Verstärkungselement 23 auf mehreren Seiten umschließen. Insbesondere liegt das elastische Rückstellelement derart an dem ersten Schenkel 3 und dem zweiten Schenkel 4 an, dass der erste Zwischenraum-Bereich 24 zwischen dem Verstärkungselement 23 und dem ersten Schenkel 3 vollständig durch das elastische Rückstellelement ausgefüllt ist und dass der zweite Zwischenraum-Bereich 25 zwischen dem Verstärkungselement 23 und dem zweiten Schenkel 4 vollständig durch das elastische Rückstellelement ausgefüllt ist. Da sich das Verstärkungselement 23 nur über einen Teil der Breite der Schenkel 3, 4 erstreckt, sind die Abschnitte des Zwischenraums 12 im Anfangsbereich 9 der Schenkel 3, 4 zwischen dem ersten Schenkel 3 und zweiten Schenkel 4, in denen kein Teil des Rückstellelements 23 zwischen dem ersten Schenkel 3 und zweiten Schenkel 4 angeordnet ist, vollständig durch das Rückstellelement ausgefüllt.

Im Anfangsbereich 9 ist der Zwischenraum 12 nach Art eines Auges mit einer kreisbogenförmigen Innenwand 14 des Grundkörpers 2 ausgebildet. Zwischen der Engstelle 13 und der Innenwand 14 weist der Zwischenraum 12 einen kreisförmigen Querschnitt auf. Wie bei dem zweiten Ausführungsbeispiel ist das elastische Rückstellelement fest mit dem Grundkörper 2, insbesondere mit den Schenkeln 3, 4, verbunden. Hierzu ist das elastische Rückstellelement einstückig mit einem spritzgegossenen Überzug 17 des Grundkörpers 2 ausgebildet. Der Überzug 17 des Grundkörpers 2 ist aus einem weichelastischen Material gebildet, beispielsweise einem thermoplastischen Elastomer oder ein Silikon mit einer Shore-Härte A im Bereich von 30 bis 80. Zudem erstreckt sich das elastische Rückstellelement ausgehend von dem Anfangsbereich 9 der Schenkel 3, 4 bis auf die dem Anfangsbereich 9 gegenüberliegenden Seite der Engstelle 13.

Die Interdental-Reinigungsvorrichtung 1 des dritten Ausführungsbeispiels kann - wie die des zweiten Ausführungsbeispiels - mittels eines Verfahrens hergestellt werden, bei welchem der Grundkörper 2 spritzgegossen wird, welcher den ersten Schenkel 3 und den zweiten Schenkel 4 aufweist. In dem Anfangsbereich 9 der Schenkel 3, 4 wird das elastische Rückstellelement 20 zwischen dem ersten Schenkel 3 und dem zweiten Schenkel 4 an den Grundkörper 2 angegossen. Hierbei kommt ein Mehrkomponenten-Spritzgussverfahren zum Einsatz. Die Ausbildung des elastischen Rückstellelements erfolgt dabei zusammen mit der Ausbildung des Überzugs 17 auf dem Grundkörper 2, so dass der Überzug 17 und das Rückstellelement 20 einstückig ausgebildet sind. Um das Einbringen des verflüssigten Materials zur Ausbildung des Rückstellelements 20 in den Zwischenraum 12 zwischen den Schenkeln 3, 4 zu erleichtern, weist der Grundkörper 2 im Anfangsbereich 9 der Schenkel 3, 4 eine in den Zwischenraum 12 zwischen dem ersten Schenkel 3 und dem zweiten Schenkel 4 mündende Einlauföffnung 18 auf. Die Einlauföffnung 18 bei dem dritten Ausführungsbeispiel als Nut ausgebildet. Somit kann bei der Herstellung der Interdental-Reinigungsvorrichtung 1 das Material des elastischen Rückstellelements durch die Einlauföffnung 18 im Anfangsbereich 9 des Grundkörpers 2 in den Zwischenraum zwischen den Schenkeln 3,4 eingebracht werden. Ferner ist erkennbar, dass an dem ersten Schenkel 3 und dem zweiten Schenkel 4 des Grundkörpers 2 jeweils ein Formschlusselement 19 angeordnet ist. Die Formschlusselemente 19 sind nach Art einer Stufe ausgebildet. Die Formschlusselemente 19 an dem Grundkörper 2 wirken - wie bei dem zweiten Ausführungsbeispiel - mit als Außenkante ausgebildeten Formschlusselementen 22 des Rückstellelementes zusammen, um das elastische Rückstellelement zwischen den Schenkeln 3, 4 zusätzlich festzulegen.

Die vorstehend beschriebenen Interdental-Reinigungsvorrichtungen 1 umfassen jeweils einen, insbesondere spritzgegossenen, einstückigen Grundkörper 2, der einen ersten Schenkel 3 und einen zweiten Schenkel 4 aufweist, deren freie Enden 7, 8 gegeneinander verschwenkbar sind. Der erste Schenkel 3 weist an seinem freien Ende 7 eine zu einer Reinigungsseite vorspringende Positionierhilfe 5, insbesondere einen Konus, auf, die eine Öffnung in dem ersten Schenkel 3 umgibt. Der zweite Schenkel 4 weist an seinem freien Ende 8 eine Halterung 6 für eine durch die Öffnung hindurchführbare Interdentalbürste 11 auf. In einem Anfangsbereich 9 der Schenkel 3, 4, welcher den freien Enden 7, 8 der Schenkel 3, 4 gegenüberliegt, ist ein elastisches Rückstellelement 20 zwischen dem ersten und dem zweiten Schenkel 3, 4 angeordnet. Hierdurch wird eine kompakte Interdental-Reinigungsvorrichtung 1 erhalten, die weniger anfällig für Materialermüdung ist.

### Bezugszeichenliste

- 1: Interdental-Reinigungsvorrichtung
- 2: Grundkörper
- 3: Schenkel
- 4: Schenkel
- 5: Positionierhilfe
- 6: Halterung
- 7: freies Ende
- 8: freies Ende
- 9: Anfangsbereich
- 10: Griffbereich
- 11: Interdentalbürste
- 12: Zwischenraum
- 13: Engstelle
- 14: Innenwand
- 15: Formschlusselement
- 17: Überzug
- 18: Einlauföffnung
- 19: Formschlusselement

- 20: elastisches Rückstellelement
- 21: Formschlusselement
- 22: Formschlusselement
- 23: Verstärkungselement
- 24: Zwischenraum-Bereich
- 25: Zwischenraum-Bereich

## Patentansprüche

1. Interdental-Reinigungsvorrichtung (1) mit einem spritzgegossenen, einstückigen Grundkörper (2), der einen ersten Schenkel (3) und einen zweiten Schenkel (4) aufweist, deren freie Enden (7, 8) gegeneinander verschwenkbar sind, wobei der erste Schenkel (3) an seinem freien Ende (7) eine zu einer Reinigungsseite vorspringende Positionierhilfe (5), insbesondere einen Konus, aufweist, die eine Öffnung in dem ersten Schenkel (3) umgibt, und der zweite Schenkel (4) an seinem freien Ende (8) eine Halterung (6) für eine durch die Öffnung hindurchführbare Interdentalbürste (11) aufweist,
**dadurch gekennzeichnet, dass**
in einem Anfangsbereich (9) der Schenkel (3,4), welcher den freien Enden (7, 8) der Schenkel (3, 4) gegenüberliegt, ein elastisches Rückstellelement (20) zwischen dem ersten und dem zweiten Schenkel (3, 4) angeordnet ist.

2. Interdental-Reinigungsvorrichtung nach Anspruch 1, **dadurch gekennzeichnet, dass** das elastische Rückstellelement (20) derart an dem ersten Schenkel (3) und dem zweiten Schenkel (4) anliegt, dass ein Zwischenraum (12) zwischen dem ersten Schenkel (3) und dem zweiten Schenkel (4) im Anfangsbereich (9) der Schenkel (3, 4) vollständig durch das Rückstellelement (20) ausgefüllt ist.

3. Interdental-Reinigungsvorrichtung nach einem der vorhergehenden Ansprüche,
**dadurch gekennzeichnet, dass** der Grundkörper (2) derart ausgebildet ist, dass sich ein Zwischenraum (12) zwischen dem ersten Schenkel (3) und dem zweiten Schenkel (4) ausgehend von deren freien Enden (7, 8) in Richtung des Anfangsbereichs bis zu einer Engstelle (13) verjüngt und ausgehend von der Engstelle (13) in Richtung des Anfangsbereichs (9) erweitert.

4. Interdental-Reinigungsvorrichtung nach Anspruch 3, **dadurch gekennzeichnet, dass** sich das elastische Rückstellelement (20) ausgehend von dem Anfangsbereich (9) der Schenkel (3, 4) bis auf die dem Anfangsbereich (9) gegenüberliegende Seite der Engstelle (13) erstreckt.

5. Interdental-Reinigungsvorrichtung nach einem der vorhergehenden Ansprüche,
**dadurch gekennzeichnet, dass** das elastische Rückstellelement (20) aus einem weichelastischen Kunststoff, insbesondere aus einem thermoplastischen Elastomer oder einem Silikon, ausgebildet ist.

6. Interdental-Reinigungsvorrichtung nach einem der vorhergehenden Ansprüche, **dadurch gekennzeichnet, dass** das elastische Rückstellelement (20) aus einem Material ausgebildet ist, das eine Shore-Härte A im Bereich von 30 bis 80 aufweist.

7. Interdental-Reinigungsvorrichtung nach einem der vorhergehenden Ansprüche, **dadurch gekennzeichnet, dass** das Rückstellelement (20) lösbar zwischen dem ersten und dem zweiten Schenkel (3, 4) angeordnet ist.

8. Interdental-Reinigungsvorrichtung nach einem der vorhergehenden Ansprüche, **dadurch gekennzeichnet, dass** an dem elastischen Rückstellelement (20) ein erstes Formschlusselement (21, 22) angeordnet ist, welches mit einem zweiten Formschlusselement (15, 19) an dem ersten oder zweiten Schenkel (3, 4) zusammenwirkt, um das elastische Rückstellelement (20) zwischen den Schenkeln (3, 4) festzulegen.

9. Interdental-Reinigungsvorrichtung nach einem der Ansprüche 1 bis 6, **dadurch gekennzeichnet, dass** das Rückstellelement (20) einstückig mit einem, insbesondere spritzgegossenen, Überzug (17) des Grundkörpers (2) ausgebildet ist.

10. Interdental-Reinigungsvorrichtung nach einem der vorhergehenden Ansprüche, **dadurch gekennzeichnet, dass** der Grundkörper (2) im Anfangsbereich (9) der Schenkel (3, 4) eine in den Zwischenraum (12) zwischen dem ersten und dem zweiten Schenkel (3, 4) mündende Einlauföffnung (18), insbesondere eine Nut, aufweist.

11. Interdental-Reinigungsvorrichtung nach einem der vorhergehenden Ansprüche, **dadurch gekennzeichnet, dass** der Grundkörper (2) einen sich an den Anfangsbereich der Schenkel (3, 4) anschließenden, insbesondere stabförmigen, Griffbereich (10) aufweist.

12. Interdental-Reinigungsvorrichtung nach einem der vorhergehenden Ansprüche, **dadurch gekennzeichnet, dass** in dem Anfangsbereich (9) der Schenkel (3, 4) ein einstückig mit dem Grundkörper (2) vorgesehenes Verstärkungselement (23) derart angeordnet ist, dass zwischen dem Verstärkungselement (23) und dem ersten Schenkel (3) ein erster Zwischenraum-Bereich (24) angeordnet ist und zwischen dem Verstärkungselement (23) und dem zweiten Schenkel (4) ein zweiter Zwischenraum-Bereich (25) angeordnet ist.

13. Interdental-Reinigungsvorrichtung nach Anspruch 12, **dadurch gekennzeichnet, dass** das elastische Rückstellelement (20) derart an dem ersten Schenkel (3) und dem zweiten Schenkel (4) anliegt, dass der erste Zwischenraum-Bereich (24) zwischen dem Verstärkungselement (23) und dem ersten Schenkel (3) vollständig durch das elastische Rückstellelement (20) ausgefüllt ist und dass der zweite Zwischenraum-Bereich (25) zwischen dem Verstärkungselement (23) und dem zweiten Schenkel (4) vollständig durch das elastische Rückstellelement (20) ausgefüllt ist.

14. Verfahren zur Herstellung einer Interdental-Reinigungsvorrichtung (1), wobei ein Grundkörper (2) spritzgegossen wird, welcher einen ersten Schenkel (3) und einen zweiten Schenkel (4) aufweist, deren freie Enden (7, 8) gegeneinander verschwenkbar sind, wobei der erste Schenkel (3) an seinem freien Ende (7) eine zu einer Reinigungsseite vorspringende Positionierhilfe (5), insbesondere einen Konus, aufweist, die eine Öffnung in dem ersten Schenkel (3) umgibt, und der zweite Schenkel (4) an seinem freien Ende (8) eine Halterung (6) für eine durch die Öffnung hindurchführbare Interdentalbürste (11) aufweist,
**dadurch gekennzeichnet, dass**
in einem Anfangsbereich (9) der Schenkel (3, 4), welcher den freien Enden (7, 8) der Schenkel (3, 4) gegenüberliegt, ein elastisches Rückstellelement (20) zwischen dem ersten und dem zweiten Schenkel (3, 4) angeordnet wird.

15. Verfahren zur Herstellung einer Interdental-Reinigungsvorrichtung nach Anspruch 14, **dadurch gekennzeichnet, dass** das elastische Rückstellelement (2) lösbar in dem Anfangsbereich (9) der Schenkel (3, 4) angeordnet wird.

16. Verfahren zur Herstellung einer Interdental-Reinigungsvorrichtung nach Anspruch 14, **dadurch gekennzeichnet, dass** das elastische Rückstellelement (20) an den Grundkörper (2) angegossen wird, insbesondere durch ein Mehrkomponenten-Spritzgussverfahren.

17. Verfahren zur Herstellung einer Interdental-Reinigungsvorrichtung nach Anspruch 16, **dadurch gekennzeichnet, dass** das Material des elastischen Rückstellelements (20) durch eine Einlauföffnung (18), insbesondere eine Nut, im Anfangsbereich (9) der Schenkel (3, 4) des Grundkörpers (2) in den Zwischenraum (12) zwischen den Schenkeln (3, 4) eingebracht, insbesondere eingespritzt, wird.

## Claims

1. Interdental cleaning device (1) having an injection-moulded, one-piece main body (2) which has a first leg (3) and a second leg (4), the free ends (7, 8) of which legs are pivotable towards each other, the first leg (3) having, at its free end (7), a positioning aid (5), in particular a cone, which protrudes towards a cleaning side and surrounds an opening in the first leg (3), and the second leg (4) having, at its free end (8), a mounting (6) for an interdental brush (11) that is guidable through the opening, **characterized in that** an elastic restoring element (20) is arranged between the first leg (3) and the second leg (4) in a start region (9) of the legs (3, 4) that lies opposite the free ends (7, 8) of the legs (3, 4).

2. Interdental cleaning device according to Claim 1, **characterized in that** the elastic restoring element (20) bears on the first leg (3) and the second leg (4) in such a way that an intermediate space (12) between the first leg (3) and the second leg (4), in the start region (9) of the legs (3, 4), is completely filled by the restoring element (20).

3. Interdental cleaning device according to either of the preceding claims, **characterized in that** the main body (2) is designed in such a way that an intermediate space (12) between the first leg (3) and the second leg (4), starting from the free ends (7, 8) of the legs in a direction of the start region, tapers to a constriction (13), and then widens, starting from the constriction (13), in the direction of the start region (9).

4. Interdental cleaning device according to Claim 3, **characterized in that** the elastic restoring element (20), starting from the start region (9) of the legs (3, 4), extends as far as the side of the constriction (13) that lies opposite the start region (9).

5. Interdental cleaning device according to one of the preceding claims, **characterized in that** the elastic restoring element (20) is made of a soft elastic plastic, in particular of a thermoplastic elastomer or a silicone.

6. Interdental cleaning device according to one of the preceding claims, **characterized in that** the elastic restoring element (20) is made of a material that has a Shore A hardness in a range of 30 to 80.

7. Interdental cleaning device according to one of the preceding claims, **characterized in that** the restoring element (20) is arranged releasably between the first leg (3) and the second leg (4).

8. Interdental cleaning device according to one of the preceding claims, **characterized in that** a first form-fit element (21, 22) is arranged on the elastic restoring element (20) and interacts with a second form-fit element (15, 19) on the first leg (3) or second leg (4) in order to fix the elastic restoring element (20) between the legs (3, 4).

9. Interdental cleaning device according to one of Claims 1 to 6, **characterized in that** the restoring element (20) is formed in one piece with an in particular injection-moulded cover (17) of the main body (2).

10. Interdental cleaning device according to one of the preceding claims, **characterized in that** the main body (2), in the start region (9) of the legs (3, 4), has an inlet opening (18), in particular a groove, which opens into the intermediate space (12) between the first leg (3) and the second leg (4).

11. Interdental cleaning device according to one of the preceding claims, **characterized in that** the main body (2) has a handle region (10), in particular a rod-shaped handle region (10), that adjoins the start region (9) of the legs (3, 4).

12. Interdental cleaning device according to one of the preceding claims, **characterized in that** a reinforcement element (23), provided in one piece with the main body (2), is arranged in the start region (9) of the legs (3, 4) in such a way that a first intermediate space region (24) is arranged between the reinforcement element (23) and the first leg (3), and a second intermediate space region (25) is arranged between the reinforcement element (23) and the second leg (4).

13. Interdental cleaning device according to Claim 12, **characterized in that** the elastic restoring element (20) bears on the first leg (3) and the second leg (4) in such a way that the first intermediate space region (24) between the reinforcement element (23) and the first leg (3) is completely filled by the elastic restoring element (20), and the second intermediate space region (25) between the reinforcement element (23) and the second leg (4) is completely filled by the elastic restoring element (20).

14. Method for producing an interdental cleaning device (1), in which method a main body (2) is injection moulded which has a first leg (3) and a second leg (4), the free ends (7, 8) of which legs are pivotable towards each other, the first leg (3) having, at its free end (7), a positioning aid (5), in particular a cone, which protrudes towards a cleaning side and surrounds an opening in the first leg (3), and the second leg (4) having, at its free end (8), a mounting (6) for an interdental brush (11) that is guidable through the opening, **characterized in that** an elastic restoring element (20) is arranged between the first leg (3) and the second leg (4) in a start region (9) of the legs (3, 4) that lies opposite the free ends (7, 8) of the legs (3, 4).

15. Method for producing an interdental cleaning device according to Claim 14, **characterized in that** the elastic restoring element (2) is arranged releasably in the start region (9) of the legs (3, 4).

16. Method for producing an interdental cleaning device according to Claim 14, **characterized in that** the elastic restoring element (20) is cast onto the main body (2), in particular by a multi-component injection moulding process.

17. Method for producing an interdental cleaning device according to Claim 16, **characterized in that** the material of the elastic restoring element (20) is introduced, in particular injected, into the intermediate space (12) between the legs (3, 4) through an inlet opening (18), in particular a groove, in the start region (9) of the legs (3, 4) of the main body (2).

## Revendications

1. Dispositif de nettoyage interdentaire (1), comprenant un corps de base (2) d'une seule pièce, moulé par injection, qui présente une première branche (3) et une deuxième branche (4) dont les extrémités libres (7, 8) peuvent pivoter l'une par rapport à l'autre, la première branche (3) présentant à son extrémité libre (7) un moyen d'aide au positionnement (5), en particulier un cône, faisant saillie vers un côté nettoyage et entourant une ouverture dans la première branche (3), et la deuxième branche (4) présentant à son extrémité libre (8) un support (6) pour une brosse interdentaire (11) pouvant être amenée à passer à travers l'ouverture,
**caractérisé en ce que** dans une zone initiale (9) des branches (3, 4), qui est opposée aux extrémités libres (7, 8) des branches (3, 4), un élément de rappel élastique (20) est disposé entre la première et la deuxième branche (3, 4).

2. Dispositif de nettoyage interdentaire selon la revendication 1, **caractérisé en ce que** l'élément de rappel élastique (20) est adjacent à la première branche (3) et à la deuxième branche (4) de telle sorte qu'un espace (12) entre la première branche (3) et la deuxième branche (4) dans la zone initiale (9) des branches (3, 4) est comblé entièrement par l'élément de rappel (20).

3. Dispositif de nettoyage interdentaire selon l'une quelconque des revendications précédentes, **caractérisé en ce que** le corps de base (2) est réalisé de telle sorte qu'un espace (12) entre la première branche (3) et la deuxième branche (4) se rétrécit en partant de leurs extrémités libres (7, 8) en direction de la zone initiale jusqu'à un rétrécissement (13) et s'élargit en partant du rétrécissement (13) en direction de la zone initiale (9).

4. Dispositif de nettoyage interdentaire selon la revendication 3, **caractérisé en ce que** l'élément de rappel élastique (20) s'étend en partant de la zone initiale (9) des branches (3, 4) jusque sur le côté, opposé à la zone initiale (9), du rétrécissement (13).

5. Dispositif de nettoyage interdentaire selon l'une quelconque des revendications précédentes, **caractérisé en ce que** l'élément de rappel élastique (20) est réalisé à partir d'une matière plastique souple, en particulier d'un élastomère thermoplastique ou de silicone.

6. Dispositif de nettoyage interdentaire selon l'une quelconque des revendications précédentes, **caractérisé en ce que** l'élément de rappel élastique (20) est réalisé à partir d'un matériau qui présente une dureté Shore A dans la plage de 30 à 80.

7. Dispositif de nettoyage interdentaire selon l'une quelconque des revendications précédentes, **caractérisé en ce que** l'élément de rappel (20) est disposé de manière amovible entre la première et la deuxième branche (3, 4).

8. Dispositif de nettoyage interdentaire selon l'une quelconque des revendications précédentes, **caractérisé en ce que** sur l'élément de rappel élastique (20), un premier élément à complémentarité de forme (21, 22) est disposé qui coopère avec un deuxième élément à complémentarité de forme (15, 19) sur la première ou la deuxième branche (3, 4) afin d'immobiliser l'élément de rappel élastique (20) entre les branches (3, 4).

9. Dispositif de nettoyage interdentaire selon l'une quelconque des revendications 1 à 6, **caractérisé en ce que** l'élément de rappel (20) est réalisé d'une seule pièce avec un enrobage (17), en particulier moulé par injection, du corps de base (2).

10. Dispositif de nettoyage interdentaire selon l'une quelconque des revendications précédentes, **caractérisé en ce que** le corps de base (2) présente dans la zone initiale (9) des branches (3, 4) une ouverture d'entrée (18) débouchant sur l'espace (12) entre la première et la deuxième branche (3, 4), en particulier une rainure.

11. Dispositif de nettoyage interdentaire selon l'une quelconque des revendications précédentes, **caractérisé en ce que** le corps de base (2) présente une zone de préhension (10), en particulier en forme de tige, suivant la zone initiale des branches (3, 4).

12. Dispositif de nettoyage interdentaire selon l'une quelconque des revendications précédentes, **caractérisé en ce que** dans la zone initiale (9) des branches (3, 4), un élément de renforcement (23) prévu d'une seule pièce avec le corps de base (2) est disposé de telle sorte qu'une première zone d'espace (24) est disposée entre l'élément de renforcement (23) et la première branche (3) et qu'une deuxième zone d'espace (25) est disposée entre l'élément de renforcement (23) et la deuxième branche (4).

13. Dispositif de nettoyage interdentaire selon la revendication 12, **caractérisé en ce que** l'élément de rappel élastique (20) est adjacent à la première branche (3) et à la deuxième branche (4) de telle sorte que la première zone d'espace (24) entre l'élément de renforcement (23) et la première branche (3) est entièrement comblée par l'élément de rappel élastique (20), et **en ce que** la deuxième zone d'espace (25) entre l'élément de renforcement (23) et la deuxième branche (4) est entièrement comblée par l'élément de rappel élastique (20).

14. Procédé de fabrication d'un dispositif de nettoyage interdentaire (1), dans lequel un corps de base (2) est moulé par injection qui présente une première branche (3) et une deuxième branche (4) dont les extrémités libres (7, 8) peuvent pivoter l'une par rapport à l'autre, la première branche (3) présentant à son extrémité libre (7) un moyen d'aide au positionnement (5), en particulier un cône, faisant saillie vers un côté nettoyage et entourant une ouverture dans la première branche (3), et la deuxième branche (4) présentant à son extrémité libre (8) un support (6) pour une brosse interdentaire (11) pouvant être amenée à passer à travers l'ouverture,
**caractérisé en ce que** dans une zone initiale (9) des branches (3, 4), qui est opposée aux extrémités libres (7, 8) des branches (3, 4), un élément de rappel élastique (20) est disposé entre la première et la deuxième branche (3, 4).

15. Procédé de fabrication d'un dispositif de nettoyage interdentaire selon la revendication 14, **caractérisé en ce que** l'élément de rappel élastique (2) est disposé de manière amovible dans la zone initiale (9) des branches (3, 4).

16. Procédé de fabrication d'un dispositif de nettoyage interdentaire selon la revendication 14, **caractérisé en ce que** l'élément de rappel élastique (20) est surmoulé sur le corps de base (2), en particulier par un procédé de moulage par injection multi-composants.

17. Procédé de fabrication d'un dispositif de nettoyage interdentaire selon la revendication 16, **caractérisé en ce que** le matériau de l'élément de rappel élastique (20) est introduit, en particulier injecté, à travers une ouverture d'entrée (18), en particulier une rainure, dans la zone initiale (9) des branches (3, 4) du corps de base (2) dans l'espace (12) entre les branches (3, 4).
